# EUROPEAN PATENT APPLICATION

(11) **EP 3 848 863 A1**
(43) Date of publication of application: **14.07.2021**
(21) Application number: 21150743.9
(22) Date of filing: 08.01.2021
(51) Int. Cl.: G06Q 10/02, G06Q 10/00, G06Q 50/26

(54) **RECYCLING BIN MANAGEMENT COMPUTING SYSTEM AND METHODS THEREOF**

(30) Priority: 10.01.2020 EP 20151190
(71) Applicant: The Procter & Gamble Company, Cincinnati, OH 45202 (US)
(72) Inventor: HADDOUCH, Hassna, 1213 Petit-Lancy Geneva (CH); RUZZI, Fabio, 1213 Petit-Lancy Geneva (CH)
(74) Representative: P&G Patent Germany

(57) **Abstract**

Systems and methods for recycling bin management are provided. Users can make reservations to deposit waste at a recycling bin. Access to a hopper of the recycling bin can be regulated by an electronic locking system. Upon confirmation of the user's reservation, the recycling bin can be unlocked to allow the user to deposit waste into the hopper.

## Description

### FIELD OF THE INVENTION

The present disclosure relates to systems and methods for the collection of used products into a recycling system.

### BACKGROUND OF THE INVENTION

In order to meet environmental objectives of sustainability in a modern world there is increasing demand for raw materials to be recovered from used products and subsequently recycled and reused, as opposed to single use products that are disposed of by incineration or by sending to a landfill. Accordingly, there are increasing needs for the recycling of used products. As the need increases, systems must be put in place so that used products can be sorted and collected for recycling. For example, used products may be collected by municipal authorities or by waste collection organizations, either via curb-side collections, at the premises of consumers, or used products may be deposited for collection at centrally located recycling collection points.

Recycling processes are being developed that are capable of sterilizing used sanitary products such as diapers, adult incontinence products, feminine hygiene products, and the like and disintegrating these products to their component parts. In particular, for products such as used sanitary products, consumers may desire to dispose of the products on a regular, even daily, basis, to reduce the nuisance of bad odors and sanitary hazards remaining in the house or office.

An efficient waste collection system requires that consumers of products sort their waste into separate waste streams and that the consumers take sorted used products to local recycling collection points. Smart recycling bins may be used in such a system. For example, US 2016/0176630, published on June 23, 2016, discloses a sensor-equipped garbage bin that indicates the used or unused level of its capacity and provides alerts at to conditions that require service.

It would be desirable for consumers to be able to take their used products to a local recycling point and to be sure that the recycling bin or bins at that recycling point will be in operation and not already be filled.

### SUMMARY OF THE INVENTION

In one form, a computer-based method comprises storing, by a bin management computing system in a data store, a plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises a unique bin identifier, geographic information associated with the geographic location of the respective recycling bin, and capacity information associated with the hopper of the respective recycling bin. The method further comprises receiving, by the bin management computing system, a deposit request from a user mobile communication device, wherein the deposit request comprises an indication of a real-time geographic location of the user mobile communication device. The method further comprises, based on the real-time geographic location of the user mobile communication device, providing, by the bin management computing system to an interface of the user mobile communication device, a visual representation of the geographic location of an identified recycling bin. The method further comprises receiving, by the bin management computing system from the user mobile communication device, a request to open the identified recycling bin, wherein the request comprises the unique bin identifier of the identified recycling bin and hopper capacity data, wherein the unique bin identifier and hopper capacity data are provided by the identified recycling bin to the user mobile communication device. The method further comprises identifying, by the bin management computing system, the bin profile of the identified recycling bin based on the unique bin identifier in the request. The method further comprises updating, by the bin management computing system, the capacity information in the bin profile of the identified recycling bin based on the hopper capacity data. The method further comprises providing, by the bin management computing system to the user mobile communication device, an unlock instruction to be provided by the user mobile communication device to the identified recycling bin.

In another form, a recycling system comprises a data store configured to store a plurality of bin profiles and a bin management computing system. The bin management computing system comprising instructions stored in a memory, which when executed by one or more processors of the bin management computing system, cause the bin management computing system to perform a method. The method comprises storing in the data store, the plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises capacity information associated with the hopper of the respective recycling bin, a residual deposit (RD) value, a number of deposits (ND) value, a number of bookings (NB) value, and a maximum available deposits (MAXAD) value. The method further comprises setting a bin status to a status level for each of the recycling bins based on the capacity information stored in the bin profile for the respective recycling bin. The method comprises receiving from the user mobile communication device, a bin reservation request for an identified recycling bin. The method comprises when the bin status level for the identified recycling bin is at a first status level, rejecting the reservation by the bin management computing system. The method comprises when the bin status level for the identified recycling bin is at a second status level and when the NB value is greater than the RD value minus the ND value, rejecting the reservation. The method comprises when the bin status level for the identified recycling bin is at the second status level and when the NB value is less than the RD value minus the ND value and the NB value is greater than the MAXAD value, rejecting the reservation. The method comprises when the bin status level for the identified recycling bin is at the second status level and when the NB value is less than the RD value minus the ND value and the NB value is less than the MAXAD value, accepting the reservation and incrementing the NB value by one. The method comprises subsequent to a deposit in the access-controlled hopper of the identified recycling bin, incrementing the ND value by one.

In one form, a computer-based method comprises storing, by a bin management computing system in a data store, a plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises a unique bin identifier, geographic information associated with the geographic location of the respective recycling bin, and capacity information associated with the hopper of the respective recycling bin. The method further comprises receiving, by a bin management computing system from each of the recycling bins via network communications, the capacity information associated with the hopper of the respective recycling bin. The method further comprises receiving, by the bin management computing system, a deposit request from a user mobile communication device, wherein the deposit request comprises an indication of a real-time geographic location of the user mobile communication device. The method further comprises based on the real-time geographic location of the user mobile communication device, providing, by the bin management computing system to an interface of the user mobile communication device, a visual representation of the geographic location of an identified recycling bin. The method further comprises receiving, by the bin management computing system from the user mobile communication device, a reservation request for the identified recycling bin. The method further comprises providing, by the bin management computing system to the identified recycling bin, a reservation token. The method further comprises subsequent to the identified recycling bin confirming the reservation with the user mobile communication device, receiving by the bin management computing system from the identified recycling bin an indication to close the reservation.

### BRIEF DESCRIPTION OF THE DRAWINGS

Figure 1 schematically depicts an example bin management computing system in networked communication with recycling bins.
Figure 2 depicts an example process that may be executed by the bin management computing system of Figure 1.
Figure 3 illustrates an example messaging sequence chart in accordance with one non-limiting embodiment.
Figure 4 schematically depicts an example bin management computing system in networked communication with a mobile communication device.
Figure 5 an example process that may be executed by the bin management computing system of Figure 4 is depicted
Figure 6 illustrates an example messaging sequence chart in accordance with one non-limiting embodiment.
Figure 7 depicts an example process that may be executed by the bin management computing system.
Figure 8 depicts an example process that may be executed by the bin management computing system.

### DETAILED DESCRIPTION OF THE INVENTION

The present disclosure relates to systems and methods for providing and managing recycling collection points that are dedicated for the collection of waste, such as diapers, adult incontinence products, feminine hygiene products, and other types of sanitary products. Such recycling collection points may be provided at convenient locations such as shopping malls, office buildings, and at other suitable locations around municipalities. Generally, consumers may register with a bin management computing system and these consumers may be granted access to an interface of the recycling system. The interface may provide the consumer with a list of local recycling collection points. Typically the registration and access to the interface are provided electronically, such as via a mobile communication device executing a specialized application. Additionally or alternatively, access to the bin management computing system may be provided through a website that is accessed via a computing device. In some implementations, the consumer's geolocation may be provided by the mobile communication device to the bin management computing system such that the consumer may be informed of the nearest recycling collection point or recycling collection point. Further, optimum routes to reach the recycling points and estimated travel time may be provided through the interface.

In some implementations the consumer may also be informed by the bin management computing system of the capacity status of the various bins at the recycling points. For example, the bins may be color coded as "green" for empty or nearly empty; "yellow" for partly filled; and "red" for full or nearly full. Other approaches for conveying capacity status can also be used, such as numerical rankings, for example. The recycling bins may comprise a sensor or other type of measuring device that generates signals such that the amount of waste in the bin can be measured. For example, the sensor may be a weighing device that is mounted in the base of the bin. In another embodiment the measuring device may be a range finder mounted at or near to the top of the bin that is configured to measure the distance between the measuring device and the top of the waste pile. Such a sensing device may use reflected light, such as infrared light, to measure the empty distance between the sensing device and the waste pile. Examples of suitable recycling bins are disclosed in US 2016/0176630, incorporated herein by reference, which includes embodiments combining both weighing device and a range finder. In some embodiments, the output of the measuring device or devices may periodically be provided to the bin management computing system such that their capacity status can be updated. In some implementations, such output can be provided to the bin management computing system from the recycling bin via network communications. In other implementations, such output can be provided by the recycling bin to the mobile communication device of the consumer, which in turn, can relay the output to the bin management computing system via network communications.

According to various implementations, a consumer may be presented with the option to reserve space in a bin at a recycling collection point of the consumer's choice. This approach may avoid the risk of the consumer making a trip to a recycling point only to find that the bin has been filled between the time that the consumer interacted with the interface and the time when the consumer arrives at the recycling point. For example, the bin management computing system may permit the consumer to make a reservation when the "fill" status of a bin is empty or partly filled, but deny a reservation when the "fill" status is full or nearly full. Moreover, the reservation may only be valid for a limited window of time. Thus, the reservation may be automatically cancelled if the consumer has not made use of it by depositing the waste into the bin within a certain time period of the reservation being recorded in the system, such as 1 hour, or other suitable window of time. As is to be appreciated, the window of time may be changed according to needs.

Recycling bins in accordance with the present disclosure may be provided with an electronic locking system. The electronic locking system may limit access to the bin to bona fide consumers, so that consumers who are registered to use the bin management computing system can deposit waste into the hopper. In accordance with various implementations, the electronic locking system may be opened by the consumer using a token, for example an electronic code which is provided to the consumer when the consumer makes a reservation. The electronic code may be an alphanumeric sequence, such as a code number, PIN or password, or the electronic code may be a graphic code such as a QR code, bar code, or other suitable token. In one example embodiment, the electronic code is provided to the consumer by the specialized application executing on their mobile communication device.

An interface may be provided at the recycling bin to enable the consumer to unlock the recycling bin. The interface may be any suitable type of interface, such as a physical keyboard, a physical PIN pad, or a touch screen, for example. Additionally or alternatively, the interface may be an electronic interface between the consumer's mobile communication device and the electronic locking system, such as, for example Near Field Communication (NFC), Bluetooth or Bluetooth LE. In some embodiments, the interface can include a camera or other type of optical device to scan a QR code, a bar code, or other indicia that may be presented on the screen of the mobile communication device, for example. After having deposited the waste into the recycling bin, the electronic locking system may be reactivated and the consumer's reservation may be closed in a reservation database of the bin management computing system.

In some embodiments, a waste management organization may be responsible for emptying bins, as required, on a regular basis. The bin management computing system may provide the waste management organization with information concerning the "fill" levels of bins around a given area. Geolocation may be used to provide the waste management organization with the locations of bins that need to be emptied, and, in some embodiments, the bin management computing system may provide a recommended route to carry out the task efficiently.

Optionally consumers may be provided with incentives to recycle waste. Incentives may be financial rewards or non-financial incentives such as rewards points, loyalty status, targeted offers or coupons for new products. Information may also be used to provide consumer incentives such as information on positive contributions to carbon footprint made by recycling the waste products. Examples of rewards systems are disclosed in US 2009/0014363, published on January 15, 2009, incorporated herein by reference. Such incentives, point balances, and other aspects of a loyalty program can be implemented by the bin management computing system, which can convey information regarding the program to the consumer through the interface or other suitable means such as emails, text messaging, social media messaging, and so forth.

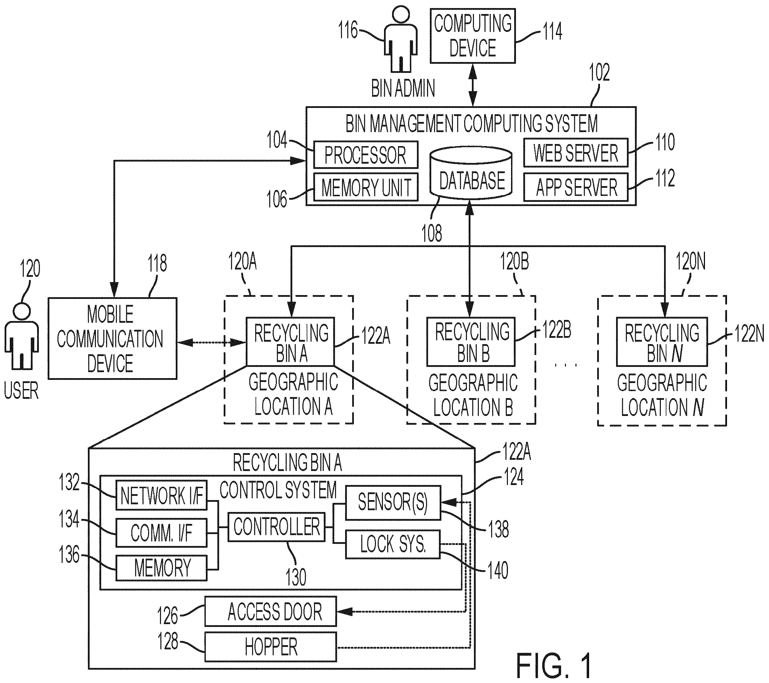

Referring now to Figure 1, an example bin management computing system 102 is schematically depicted as being in networked communication with recycling bins 122A-*N*. The bin management computing system 102 may be in communication with the recycling bins 122A*N* through any suitable network or networks, such as a local area network (LAN), a wide area network (WAN), a cellular network, a publicly-accessible, and/or a global network such as the Internet. Each of the recycling bins 122A-*N* may be positioned at a respective geographic location 120A-*N*. The geographic locations 120A-*N* may be, for example, at a shopping mall, an office building, or any other suitable locations that would be convenient for consumers to access. The bin management computing system 102 may also be in communication with a mobile communication device 118 of a user 120 that is desiring to deposit waste into one of the recycling bins 122A-*N*. The bin management computing system 102 may also be in communication with a computing device 114 of a user 116, which may be, for example, a third party user. The user 116 may be a system administrator, waste collection personnel, incentive program manager, or other type of user. The mobile communication device 118 and the computing device 114 may each be any suitable computing device capable of network communications, such as, without limitation, a smartphone, a tablet computer, a laptop computer, a desktop computer, a gaming system, and so forth.

The bin management computing system 102 may be provided using any suitable processor-based device or system, such as a personal computer, mobile communication device, laptop, tablet, server, mainframe, or a collection (e.g., network) of multiple computers, for example. The bin management computing system 102 may include one or more processors 104 and one or more computer memory units 106. For convenience, only one processor 104 and only one memory unit 106 are shown in Figure 1. The processor 104 may execute software instructions stored on the memory unit 106. The processor 104 may be implemented as an integrated circuit (IC) having one or multiple cores. The memory unit 106 may include volatile and/or non-volatile memory units. Volatile memory units may include random access memory (RAM), for example. Non-volatile memory units may include read only memory (ROM), for example, as well as mechanical non-volatile memory systems, such as, for example, a hard disk drive, an optical disk drive, etc. The RAM and/or ROM memory units may be implemented as discrete memory ICs, for example.

The memory unit 106 may store executable software and data for use by the bin management computing system 102 described herein. When the processor 104 of the bin management computing system 102 executes the software, the processor 104 may be caused to perform the various operations of the bin management computing system 102, such as communicate with the recycling bins 122A-*N*, manage reservations, provide an interface on the mobile communication device 118, and so forth.

Data used by the bin management computing system 102 may be from various sources, such as database(s) 108, which may be electronic computer databases, for example. The data stored in the database(s) 108 may be stored in a non-volatile computer memory, such as a hard disk drive, a read only memory (e.g., a ROM IC), or other types of non-volatile memory. In some embodiments, one or more databases 108 may be stored on a remote electronic computer system, for example. As it to be appreciated, a variety of other databases, or other types of memory storage structures, may be utilized or otherwise associated with the bin management computing system 102. The database 108 may store, for example, bin status profiles for each of the recycling bins 122A-N, user profiles, reservations, and so forth.

In accordance with various embodiments, the bin management computing system 102 may include one or more computer servers, which may include one or more web servers, one or more application servers, and/or one or more of other types of servers. For convenience, only one web server 110 and one application server 112 are depicted in Figure 1, although one having ordinary skill in the art would appreciate that the disclosure is not so limited. The servers 110, 112 may be comprised of processors (e.g. CPUs), memory units (e.g. RAM, ROM), non-volatile storage systems (e.g. hard disk drive systems), and other elements.

In some embodiments, the web server 110 may provide a graphical web user interface through which various users 116 and 120 may interact with the bin management computing system 102. The graphical web user interface may also be referred to as a client portal, client interface, graphical client interface, administrative interface, and so forth. The web server 110 may accept requests, such as HTTP/HTTPS requests, from various entities, such as HTTP/HTTPS responses, along with optional data content, such as web pages (e.g. HTML documents) and linked objects (such as images, video, and so forth). The application server 112 may provide a user interface, such as an interface presented on the mobile communication device 118 or a computing device 114, for users 120, 116 who do not communicate with the bin management computing system 102 using a web browser. Such users 120, 116 may have special software installed on their computing devices to allow the user to communicate with the application server 112 via a communication network.

The recycling bins 122A-*N* may include componentry to facilitate various functionality in accordance with the present disclosure, such as regulating access, measuring capacity, detecting operational errors, communicating with the bin management computing system 102, and/or communicating with the mobile communication device 118. Figure 1 schematically illustrates example physical and electrical components of the recycling bin 122A. The recycling bin 122A may generally include, for example, a control system 124, an access door 126, and a hopper 128. The access door 126 may be, for example, a door, a hatch, a lid, a gate, or any other suitable structure that may be locked to regulate access to the hopper 128. The control system 124 may include a controller 130 configured to execute instructions stored in a memory 136. The controller 130 may be in communication with a network interface 132 that is configured to provide network communication with the bin management computing system 102 via wired and/or wireless networks. In accordance with some embodiments, the controller 130 may also be in communication with a communication interface 134 for providing network communication with the mobile communication device 118, such as via a near field wireless communication protocol, such as Near Field Communication (NFC), Bluetooth or Bluetooth LE. The recycling bin 122A may also include, for example, a keypad, a display screen, a touch screen, or other input/output devices allowing for user interaction with the recycling bin 122A.

The control system 124 may include components for regulating access to the hopper 128 and monitoring the available capacity of the hopper 128. In the illustrated example, a locking system 140 includes an electronically controlled lock that is configured to lock or unlock the access door 126. The locking system 140 may normally keep the electronically controlled lock in a locked position such that the access door 126 cannot be opened. Once an unlock command is received, such as from the bin management computing system 102, the locking system 140 may temporarily unlock the access door 126 such that waste can be deposited into the hopper 128. Subsequently, the locking system 140 may again lock the access door 126. The control system 124 may also include one or more sensors 138 that are configured to generate a signal responsive to the amount of waste deposited into the hopper 128. In this regard, the sensor(s) 138 may be any suitable type of sensor or array of sensors, such as a pressure sensor, a weight sensor, an infrared sensor, or other type of optical range finding sensor, for example.

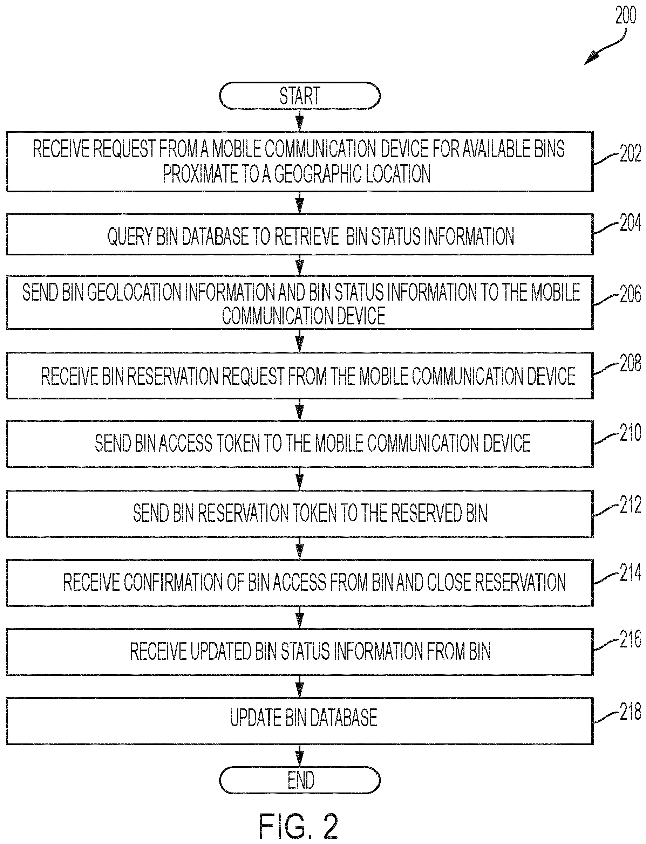

Referring now to Figure 2, an example process 200 that may be executed by the bin management computing system 102 of Figure 1 is depicted. At 202, the bin management computing system 102 receives a request from the mobile communication device 118 for available recycling bins 122A-*N* that are proximate to a geographic location of the mobile communication device 118. The request may include GPS information, as may be collected from the mobile communication device 118. Additionally or alternatively, the user 120 may provide an address, a zip code, a city name, or other geographic information to allow the bin management computing system 102 to determine which of the recycling bins 122A-*N* are physically proximate to the user 120. At 204, the bin management computing system 102 may query the database 108 to receive bin status information based on the request. At 206, the bin management computing system 102 may send bin geolocation information and bin status information to the mobile communication device 118 for presentation to the user 120 via an interface. This information may be graphically conveyed to the user 120 using any suitable technique, such as a ranked listing, icons displayed on a map, among other approaches. In some implementations, the available capacity of each recycling bin 122A-*N* identified for the user 120 may be presented via the interface. For example, the available capacity may be indicated by color, with a first color indicating the bin is empty or nearly empty, a second color indicating the bin is partially full, and a third color indicating the bill is full and not presently available for accepting waste.

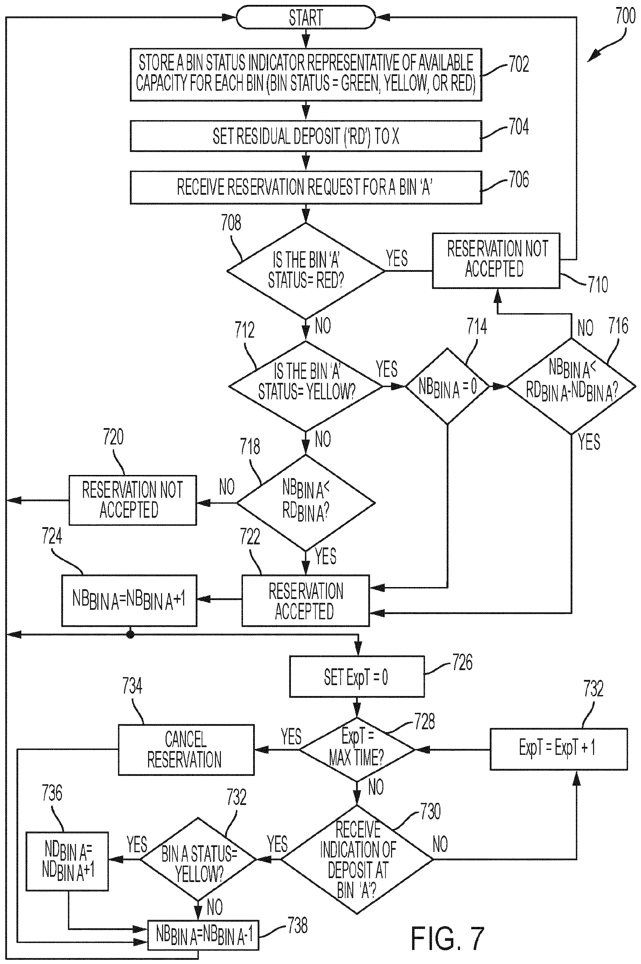

At 208, the bin management computing system 102 may receive a bin reservation request from the mobile communication device 118. The bin reservation request may identify a particular one of recycling bins 122A-*N* in which the user 120 wishes to deposit waste. The bin reservation may be for immediate access (i.e., within the next 5, 10, 15, or 30 minutes of the request) or for a time window at a future point in time. As provided below with reference to Figure 7, in some embodiments, the bin management computing system 102 may implement decisioning to determine whether to accept the reservation based on, in part, the number of reservations already in the system and the amount of capacity left in the hopper. In any event, once the reservation is approved, the bin management computing system 102 may store the user's reservation of a particular recycling bin for a particular time window in the database 108. In some embodiments, as shown at 210, the bin management computing system 102 may send a bin access token to the mobile communication device 118, with the token usable to unlock the reserved recycling bin. The type or format of the token may vary, but in some embodiments, the token is a QR code, a PIN code, a bar code, a password, among a variety of other tokens that may be entered into or otherwise provided to the reserved recycling bin by the user 120. In some embodiments, at 212, the bin management computing system 102 may also send a corresponding token to the reserved recycling bin as part of the reservation process.

While being physically proximate to the reserved recycling bin, the user 120 may provide their token to the recycling bin 122A in order to gain access. Upon verification, either locally by the bin or by the bin management computing system 102, the controller 130 may provide an unlock instruction to the locking system 140. With the access door 126 unlocked, the user 120 can deposit waste into the hopper 128. The controller 130 may eventually provide a lock instruction to the locking system 140. Additionally, based on the verification of the reservation, at 214, the bin management computing system 102 may also update the database 108 to close out that particular reservation.

The database 108 may also include a capacity status for each of the recycling bins 122A*N,* and at 216, bin management computing system 102 may receive updated bin status information from the recycling bins 122A-*N*. This status information may include, for example, capacity information based on the data collected by the sensors 138 at the recycling bins 122A-*N*. The status information may also include operational data, such as error codes, and the like. At 218, the bin status can be updated.

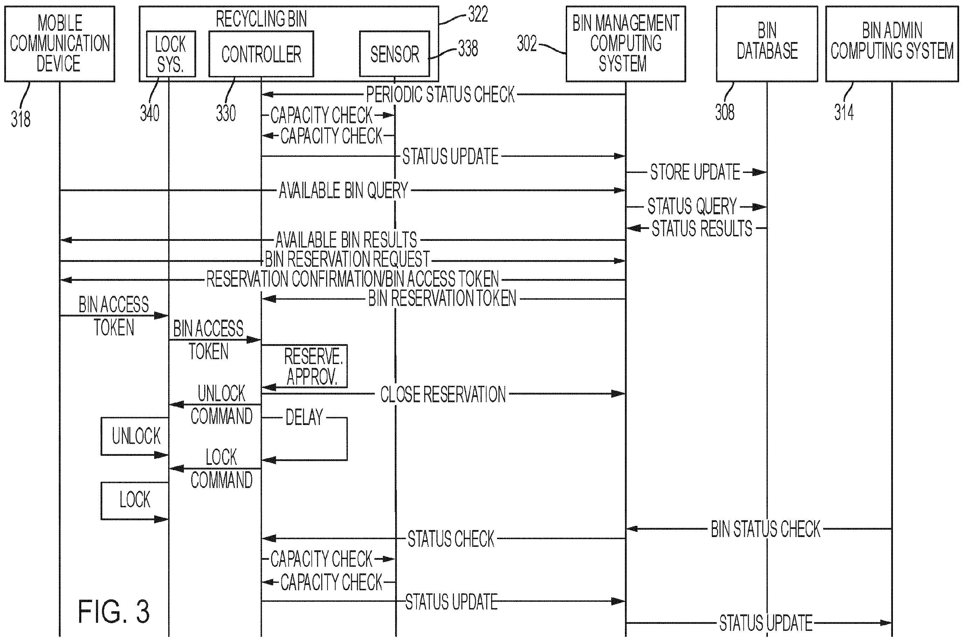

Figure 3 is an example messaging sequence chart in accordance with one non-limiting embodiment. The message sequence chart depicts example communications between a mobile communication device 318, a recycling bin 322, a bin management computing system 302, a bin database 308, and a bin administration computing system 314. It is noted that in some implementations, the bin database 308 may be considered a component of the bin management computing system 302. Further, as shown in Figure 3, the recycling bin 322 may include a locking system 340, a controller 330, and a sensor 338, similar to those features described with regard to the recycling bin 122A in Figure 1. Various networks communications in the message sequence chart may be sent via a local area network (LAN), a wide area network (WAN), a cellular network, a publicly-accessible, a global network such as the Internet, or combinations thereof.

The bin management computing system 302 may send a periodic status check to the controller 330 of the recycling bin 322. In response, the controller 330 may query the sensor 338 for a capacity check. The sensor 338 may return a capacity update to the bin management computing system 302. The format of the capacity update may be dependent on the type of sensor 338. For example, for optical sensors, the capacity update may be a distance measurement, while for weight sensors, the capacity update may be a weight. The controller 330 may then provide the status update to the bin management computing system 302, which in turn, may store the update in the bin database 308.

The mobile communication device 318 may submit an available bin query to the bin management computing system 302. Such query may be submitted by a user of the mobile communication device 318 through an interface of a specialized application executing on the device or through a website interface presented on a web browser of the device, for example. The available bin query may include geographic information such that the bin management computing system 302 may query the bin database 308 to identify recycling bins geographically proximate to the user. The bin database 308 may also provide capacity information regarding each of the identified bins in the status results.

The bin management computing system 302 may then provide the results to the mobile communication device 318 for display to the user. For instance, the results may be displayed as icons on a map or as a listing, with the driving distance to each bin provided to the user. The user may submit a bin reservation request for one of the bins to the bin management computing system 302. The bin management computing system 302 may then provide confirmation of the reservation to the mobile communication device 318. In some embodiments, a bin access token is also provided by the bin management computing system 302 to the mobile communication device 318. Responsive to scheduling the reservation, the bin management computing system 302 may also provide a bin reservation token to the reserved recycling bin, shown in Figure 3 as recycling bin 322.

The user may then travel to the recycling bin 322 (if the user is not already proximate to the recycling bin 322 at the time of the reservation request) and provide the bin access token. In the illustrated embodiment, the bin access token is provided to the locking system 340, which in turn, provides the token to the controller 330 for verification. In one embodiment, the controller 330 locally confirms the token provided by the mobile communication device 318 and matches the bin reservation token previously provided by the bin management computing system 302 as part of a reservation approval process. The controller 330 may then provide an unlock command to the locking system 340 and also communicate with the bin management computing system 302 to close the reservation. With the locking system 340 in the unlocked position, the user can deposit waste into the recycling bin 322. Subsequent to a delay, the controller 330 may provide a lock command to the locking system 340.

As shown in Figure 3, a third party computing system, such as the bin administration computing system 314, may submit a bin status check to the bin management computing system 302. The bin management computing system 302 may query the recycling bin 322, as well as other recycling bins in the system. The controller 330 of the recycling bin 322 may poll the sensor 338 to receive updated capacity information, which may then be transmitted to the bin management computing system 302. The bin management computing system 302 may then relay that information to the bin administration computing system 314.

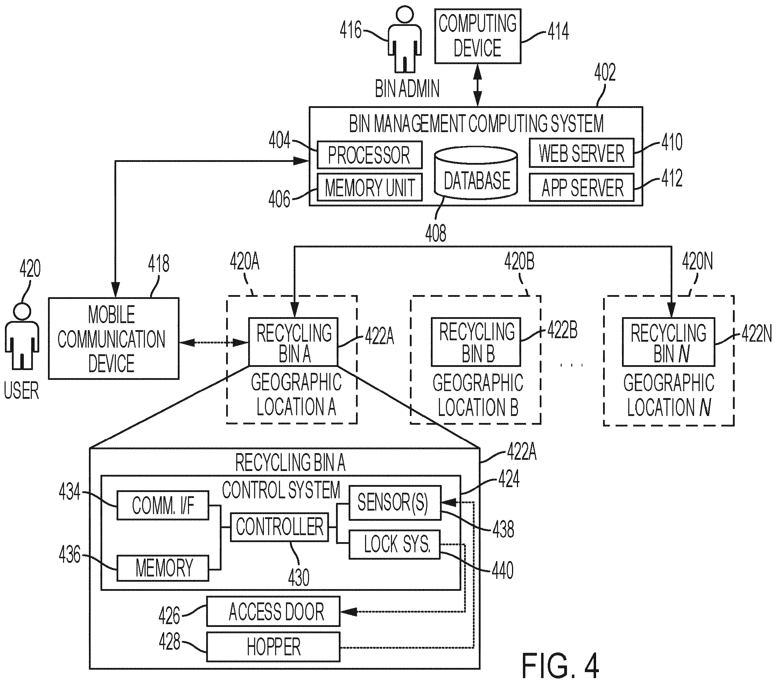

While Figures 1-3 schematically depict recycling bins 122A-*N* and 322 that are configured to communicate directly with bin management computing system 102 and 302 via network communications, in other implementations the recycling bins are not configured to communicate directly with a bin management computing system. Instead, as described in more detail below with reference to Figures 4-6, the recycling bins may be configured to locally communicate with mobile communication devices of users that are depositing waste. The mobile communication devices may then relay the information received from the recycling bin to the bin management computing system via a network connection between the mobile communication device and the bin management computing system.

Referring now to Figure 4, an example bin management computing system 402 is schematically depicting as being in networked communication with a mobile communication device 418. In this example embodiment, the bin management computing system 402 may receive information regarding recycling bins 422A-*N* via communications with the mobile communication device 418. Similar to Figure 1, each of the recycling bins 422A-*N* may be positioned at a respective geographic location 420A-*N*. The bin management computing system 402 may be provided using any suitable processor-based device or system, such as a personal computer, mobile communication device, laptop, tablet, server, mainframe, or a collection (e.g., network) of multiple computers, for example. Also, similar to Figure 1, the bin management computing system 402 may include one or more processors 404 and one or more computer memory units 406. The bin management computing system 402 may also include a database 408, a web server 410, and an app server 412. The bin management computing system 402 may also be in networked communications with various third party computing devices, schematically shown as computing device 414 that may be operated by a user 416.

The recycling bins 422A-N may include componentry to facilitate various functionality, such as regulating access, measuring capacity, detecting operational errors, communicating with the mobile communication device 418, and so forth. Figure 4 schematically illustrates example components of the recycling bin 422A. The recycling bin 422A may include, for example, a control system 424, an access door 426, and a hopper 428. The access door 426 may be, for example, a door, a hatch, a lid, a gate, or any other suitable structure that may be locked to regulate access to the hopper 428. The control system 424 may include a controller 430 configured to execute instructions stored in a memory 436. For example, the controller 430 may be in communication with a communication interface 434 configured to provide wireless communication between the recycling bin 422A and the mobile communication device 418. In some embodiments, short range and/or near field communication protocols may be utilized by the communication interface 434 to allow the transfer of data between the mobile communication device 418 and the recycling bin 422A. The recycling bin 422A may also include, for example, a keypad, a display screen, a touch screen, or other input/output devices allowing for user interaction with the recycling bin 422A.

The control system 424 may also include components for regulating access to the hopper 428 and monitoring the available capacity of the hopper 428. In the illustrated example, a locking system 440 includes an electronically controlled lock that is configured to lock or unlock the access door 426. The locking system 440 may normally keep the electronically controlled lock in a locked position such that the access door 426 cannot be opened. Once an unlock command is received, such as from the controller 430, the locking system 440 may temporarily unlock the access door 426 such that waste may be deposited into the hopper 428. Subsequently, the locking system 440 may again lock the access door 426. The control system 424 may also include one or more sensors 438 that are configured to generate a signal responsive to the amount of waste deposited into the hopper 428. In this regard, the sensor(s) 438 may be any suitable type of sensor or array of sensors, such as a pressure sensor, a weight sensor, an infrared sensor, or other type of optical range finding sensor, for example.

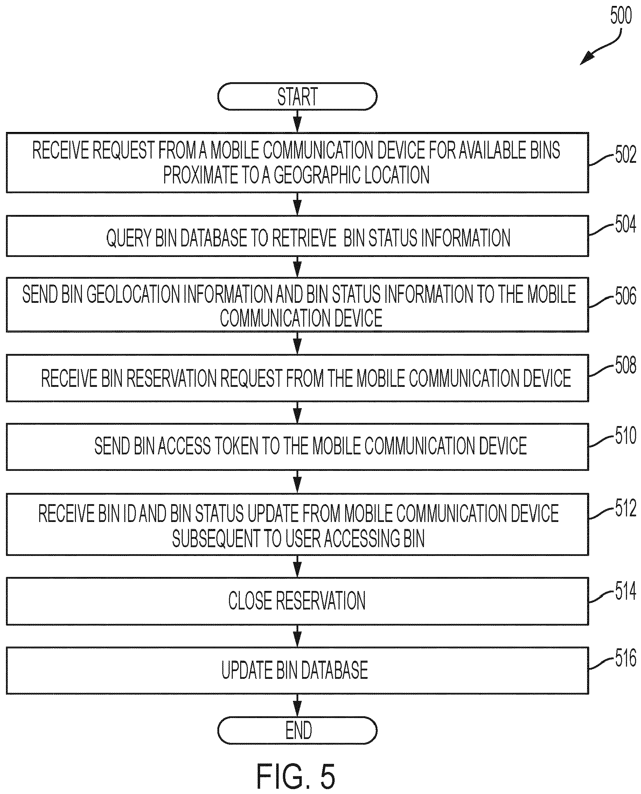

Referring now to Figure 5, an example process 500 that may be executed by the bin management computing system 402 of Figure 4 is depicted. At 502, the bin management computing system 402 receives a request from the mobile communication device 418 for available recycling bins 422A-*N* that are proximate to the geographic location of the mobile communication device 418. The request may include GPS information, as may be collected from the mobile communication device 418. Additionally or alternatively, the user 420 may provide an address, a zip code, a city name, or other geographic information. At 504, the bin management computing system 402 may query the database 108 to receive bin status information based on the request. At 506, the bin management computing system 402 may send bin geolocation information and bin status information to the mobile communication device 418 for presentation via an interface. This information may be conveyed to the user 420 using any suitable technique, such as a listing, displaying icons on a map, among other approaches. In some implementations, the available capacity of each recycling bin 422A-*N* that are identified to the user 420 may be presented via the interface.

At 508, the bin management computing system 402 may receive a bin reservation request from the mobile communication device 418. The bin reservation request may identify a particular one of recycling bins 422A-*N* in which the user 420 wishes to deposit waste. The bin reservation may be for immediate access (i.e., within the next 5, 10, 15, or 30 minutes of the request) or for a time window at a future point in time. As provided below with reference to Figure 7, in some embodiments, the bin management computing system 402 may implement decisioning to determine whether to accept a reservation based on, in part, the number of reservations already in the system and the amount of capacity left in the hopper. At 510, once the reservation is approved and stored by the bin management computing system 402 in the database 408, in some embodiments, the bin management computing system 402 may send a bin access token to the mobile communication device 418, with the token usable to unlock the reserved recycling bin. The type of token may vary, but in some embodiments, the token is a QR code, a PIN code, a bar code, among a variety of other tokens that may be entered into or otherwise provided to the reserved recycling bin by the user 420.

While being physically proximate to the reserved recycling bin, the user 420 may provide their token to the recycling bin 420. Upon verification of the token, the controller 430 may provide an unlock instruction to the locking system 440. With the access door 426 unlocked, the user 420 may deposit waste into the hopper 428. The controller 430 may eventually provide a lock instruction to the locking system 440. The recycling bin may also wirelessly transmit information to the mobile communication device 418 such that this information may be relayed to the bin management computing system 402. By way of example, the recycling bin may transmit capacity data, operational data, error codes, use data, as well as a bin identifier. The mobile communication device 418 may transmit this information, and at 512, the bin management computing system 402 may receive the bin identifier and bin status information. Upon receiving this information, the bin management computing system 402 may close out the reservation at 514. At 516, the bin management computing system 402 may update the database 408 based on the information received from the mobile communication device 418 regarding the recycling bin.

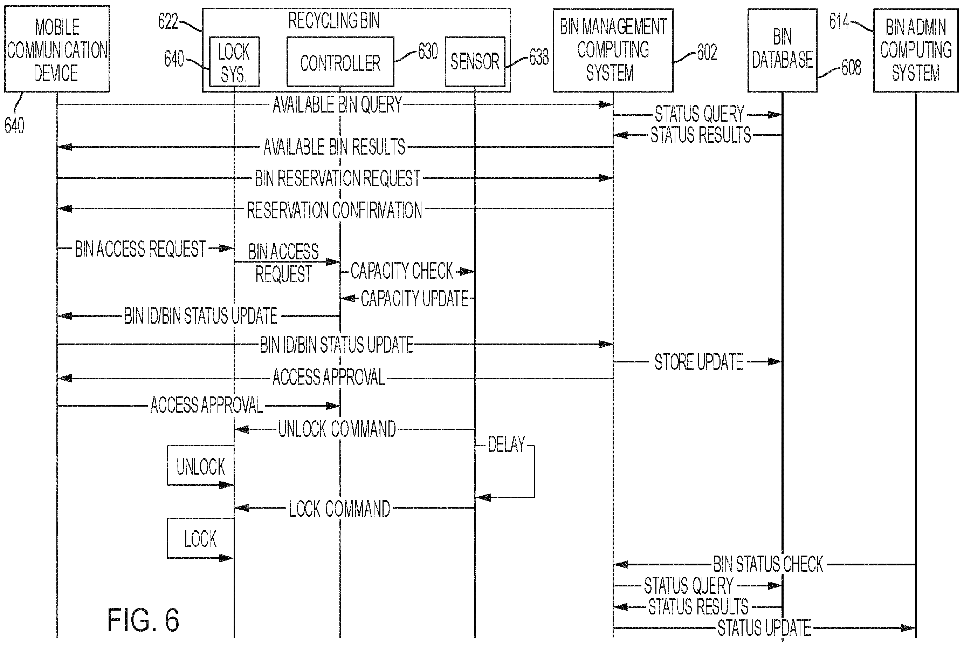

Figure 6 is an example messaging sequence chart in accordance with one non-limiting embodiment. The message sequence chart depicts example communications between a mobile communication device 618, a recycling bin 622, a bin management computing system 602, a bin database 608, and a bin administration computing system 614. It is noted that in some implementations, the bin database 608 may be considered a component of the bin management computing system 602. Further, as shown the recycling bin 622 may include a locking system 640, a controller 630, and a sensor 638, similar to those features described with regard to the recycling bin 422A in Figure 4. Various networks communications in the message sequence chart may be sent via a local area network (LAN), a wide area network (WAN), a cellular network, a publicly-accessible, a global network such as the Internet, or combinations thereof. As compared to the message sequence chart of Figure 3, however, the recycling bin 622 of Figure 6 does not have direct network connectivity with the bin management computing system 602, and instead relays information to the bin management computing system 602 via the mobile communication device 618.

The mobile communication device 618 may submit an available bin query to the bin management computing system 602. Such query may be submitted by a user of the mobile communication device 618 through an interface of a specialized application executing on the device or through a website interface presented on a web browser of the device, for example. The available bin query may include geographic information such that the bin management computing system 602 may query the bin database 608 to identify recycling bins geographically proximate to the user. The bin database 608 may also provide capacity information regarding each of the identified bins in the status results.

The bin management computing system 602 may then provide the results to the mobile communication device 618 for display to the user. For instance, the results may be displayed as icons on a map or as a listing, with the driving distance to each bin provided to the user. The user may submit a bin reservation request for one of the bins to the bin management computing system 602. The bin management computing system 602 may then provide confirmation of the reservation to the mobile communication device 618. In some embodiments, a bin access token is also provided by the bin management computing system 602 to the mobile communication device 618.

The user may then travel to the recycling bin 622 (if the user is not already proximate to the recycling bin 622 at the time of the reservation request) and submit a bin access request to the recycling bin 622. The form of the bin access request may vary. For instance the user may provide a bin access token, type a PIN into a PIN pad, scan a QR code, or otherwise request access. In the illustrated embodiment, when bin access is requested, the controller 630 may query the sensor 638 for a capacity check. The sensor 638 may return a capacity update. The format of the capacity update may be dependent on the type of sensor 638. For example, for optical sensors, the capacity update may be a distance measurement, while for weight sensors, the capacity update may be a weight. The controller 630 may then provide the status update to the mobile communication device 618, in addition to a bin identifier. The mobile communication device 618 may relay this information to the bin management computing system 602 for processing. For instance, the bin management computing system 602 may update the bin database 608 with the new capacity information for that recycling bin. In the illustrated embodiment, the bin management computing system 602 may also provide access approval to the mobile communication device 618, which in turn may transmit the approval to the controller 630 of the recycling bin 622.

The controller 630 may then provide an unlock command to the locking system 640. With the locking system 640 in the unlocked position, the user may deposit waste into the recycling bin 622. Subsequent to a delay, the controller 630 may provide the lock command to the locking system 640.

Further, as shown in Figure 6, a third party computing system, such as the bin administration computing system 614, may submit a bin status check to the bin management computing system 602. The bin management computing system 602 may query the bin database 608 to retrieve capacity information. The bin management computing system 602 may then relay that information to the bin administration computing system 614.

Referring now to Figure 7, an example process 700 that may be executed by a bin management computing system is depicted. At 702, a bin status indicator representative of the available capacity for each recycling bin is stored. For the purposes of illustration, the bin status may be one of "green," "yellow," or "red," although other suitable bin status schema may be used. At 704, a residual deposit variable (RD) is set to X, where X is a constant that is an estimate of the remaining number of available deposits before the recycling bin will be full..

At 706, a reservation request for one of the recycling bins (shown as recycling bin "A") is received by the bin management computing system. The bin management computing system queries the status of the bin "A" to determine if the reservation can be accepted. If the bin status is "red" at 708 the bin is full so the process proceeds to 710 and reservation is not accepted. The user can then attempt to seek a reservation at another bin, if they so choose. If the bin status is not "red" at 708, the process proceeds to 712 to determine if the status is "yellow." If the status is "yellow", additional decisioning is used to determine whether to accept this additional reservation is not. The process proceeds to 714 where it is determined if the number of bookings in the system for that bin (NB_{Bin A}) is presently zero. If the number of bookings is zero, the process proceeds to 722 and the reservation is accepted. If, however, the number of bookings is not zero, the process proceeds to 716 and it is determined if NB_{Bin A} is less than the difference of the number of deposits at that bin (ND_{Bin A}) and the residual deposit amount for that bin (RD_{Bin A}). The variable ND_{Bin A} is the number of deposits made since the bin transitioned from green to yellow status. The decisioning at 716 ensures that users who have previously booked a reservation will still be able to make a deposit at the bin. If RD_{Bin A} minus ND_{Bin A} is greater than NB_{Bin A}, the process proceeds to 710 and the reservation is not accepted. If, however, RD_{Bin A} minus ND_{Bin A} is less than NB_{Bin A}, the process proceeds to 722 and the reservation is accepted.

Referring back to 712, if it is determined that the bin status is not yellow (i.e., the bin status is green), the process proceeds to 718 to determine if the number of bookings is less than the residual deposit for that bin. If it is determined at 718 that NB_{Bin A} is greater than RD_{Bin A}, the process proceeds to 720 and the reservation is not accepted. If, however, NB_{Bin A} is determined to be less than RD_{Bin A}, the process proceeds to 722 and the reservation is accepted.

The process then proceeds to 724 and NB_{Bin A} is incremented by one. The process then loops back to the start to receive additional reservations. With regard to the reservation that was accepted at 722, the process proceeds to 726, a timer variable (ExpT) is reset. The timer variable can be used by the system as a counter so that the reservation can be cleared from the system after a certain period of time. At 728, it is determined if the counter has reached a maximum amount of time (MAX TIME), and if not, the process continues to 730 to determine if an indication has been received that a deposit was made to bin "A". If an indication has not been received, the counter is incremented at 732 and the process again checks to see if the counter has reached the maximum amount of time. If the maximum amount of time has been reached, the reservation is cancelled out of the system at 734 and the number of bookings for that bin is decremented at 738. Referring back to 730, if an indication has been received that a deposit was made to bin "A", the system proceeds to 732 to check whether the bin has a "yellow" status. If the bin has a "yellow" status, the process proceeds to 736 and ND_{Bin A} is incremented by one. If the bin does not have a "yellow" status at 732, the process proceeds to 738 and the number of bookings is decremented by one. The process then loops back to the start.

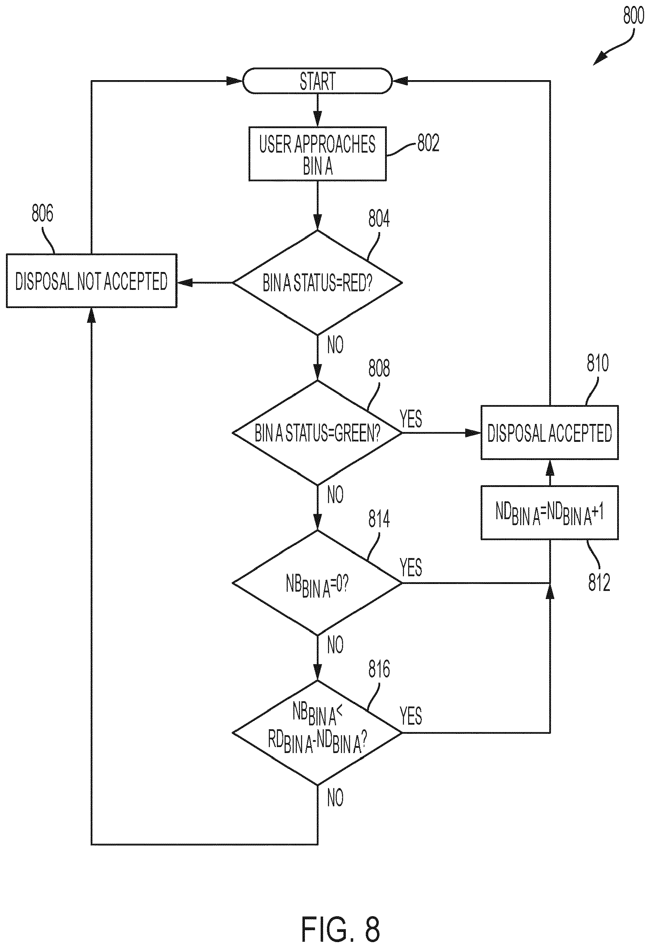

Referring now to Figure 8, another example process 800 that may be executed by a bin management computing system is depicted. The process 800 can be implemented, for example, when a user approaches a bin without first making a reservation with the system. At 802, the user approaches a bin (shown as Bin A) and submits to a bin management computing system a request to make a deposit at the bin, such as through interactions with an interface on the bin. At 804, the bin management computing system determines if the current status of the bin is "red", and if so, the disposal is not accepted at 806 and the bin remains locked. If the current status of the bin is not "red", the process continues to 808 and the bin management computing system determines if the status of the bin is "green." If the bin has a "green" status, the bin is unlocked for acceptance of the disposable at 810 and the process loops back to the start. If at 808 it is determined that the bin status is not "green" the process proceeds to 814 to determine if the number of bookings stored for the bin is currently zero. If there are no bookings stored for that bin, the process proceeds to 812 and the number of deposits (ND_{Bin A}) is incremented by one and the disposable is accepted at 810 by unlocking the bin. If the number of bookings for the bin is not zero at 814, the process proceeds to 816 and it is determined if the number of booking stored in the system for that bin is less than the difference of the residual deposit amount for that bin (RD_{Bin A}) and the number of deposits made at the bin (ND_{Bin A}). If so, the process proceeds to 812 and ND_{Bin A} is incremented by one and the disposable is accepted at 810. If, however, the number of bookings is greater than the difference of RD_{Bin A} and t ND_{Bin A}, the disposal is not accepted at 806 and the bin remains locked.

### COMBINATIONS

A. A computer-based method, comprising:
   storing, by a bin management computing system in a data store, a plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises a unique bin identifier, geographic information associated with the geographic location of the respective recycling bin, and capacity information associated with the hopper of the respective recycling bin;
   receiving, by the bin management computing system, a deposit request from a user mobile communication device, wherein the deposit request comprises an indication of a real-time geographic location of the user mobile communication device;
   based on the real-time geographic location of the user mobile communication device, providing, by the bin management computing system to an interface of the user mobile communication device, a visual representation of the geographic location of an identified recycling bin, wherein the identified recycling bin;
   receiving, by the bin management computing system from the user mobile communication device, a request to open the identified recycling bin, wherein the request comprises the unique bin identifier of the identified recycling bin and hopper capacity data, wherein the unique bin identifier and hopper capacity data are provided by the identified recycling bin to the user mobile communication device;
   identifying, by the bin management computing system, the bin profile of the identified recycling bin based on the unique bin identifier in the request;
   updating, by the bin management computing system, the capacity information in the bin profile of the identified recycling bin based on the hopper capacity data; and
   providing, by the bin management computing system to the user mobile communication device, an unlock instruction to be provided by the user mobile communication device to the identified recycling bin.
B. The computer-based method according to paragraph A, further comprising:
   subsequent to providing the visual representation of the geographic location of the identified recycling bin to the interface of the user mobile communication device, receiving, by the bin management computing system from the user mobile communication device, a bin reservation request for the identified recycling bin; and
   storing, by the bin management computing system, a reservation for the identified recycling bin, wherein the reservation comprises a deposit window.
C. The computer-based method according to paragraph B, further comprising:
   subsequent to receiving the request to open the identified recycling bin from the user mobile communication device, confirming by the bin management computing system, that the request is received within the deposit window.
D. The computer-based method of claim 1, wherein each of the plurality of bin profiles comprises a residual deposit (RD) value, a number of deposits (ND) value, and a number of bookings (NB) value.
E. The computer-based method according to paragraph D, further comprising:
   setting, by the bin management computing system, a bin status for each of the recycling bins based on the capacity information stored in the bin profile for the respective recycling bin, wherein the bin status is settable to a status level.
F. The computer-based method according to paragraph E, further comprising:
   receiving, by the bin management computing system from the user mobile communication device, a bin reservation request for the identified recycling bin;
   when the bin status level for the identified recycling bin is at a first status level, rejecting the reservation by the bin management computing system;
   when the bin status level for the identified recycling bin is at a second status level and when the NB value is zero, accepting the reservation by the bin management computing system;
   when the bin status level for the identified recycling bin is at a second status level and the NB value is not zero, rejecting the reservation by the bin management computing system when the NB value is greater than the RD value minus the ND value; and
   when the bin status level for the identified recycling bin is at a second status level and the NB value is not zero accepting the reservation by the bin management computing system and incrementing the NB value by one when the NB value is less than the RD value minus the ND value.
G. The computer-based method according to paragraph F, further comprising:
   subsequent to providing the unlock instruction to the user mobile communication device, incrementing the ND value by one by the bin management computing system when the bin status level is at the second status level.
H. The computer-based method according to any of paragraphs A-G, wherein providing the visual representation of the geographic location of the identified recycling bin comprises providing on a map visual representations of the geographic locations of each of a plurality of identified recycling bins.
I. The computer-based method according to paragraph H, further comprising:
   providing, by the bin management computing system to the interface of the user mobile communication device, an indication of an available capacity of each of the plurality of identified recycling bins.
J. The computer-based method according to paragraph I, wherein the indication of the available capacity of each of the plurality of identified recycling bins is a color-coded indication.
K. The computer-based method according to any of paragraphs A-J, further comprising:
   identifying, by the bin management computing system, at least one recycling bin at a maximum storage capacity.
L. The computer-based method according to paragraph K, further comprising:
   notifying, by the bin management computing system, a third party of the at least one recycling bin at maximum storage capacity.
M. The computer-based method according to paragraph L, further comprising:
   receiving, by the bin management computing system from the third party, an indication the at least one recycling bin at storage capacity as been emptied; and
   updating, by the bin management computing system, the capacity information of the bin profile of the at least one recycling bin that has been emptied.
N. The computer-based method according to any of paragraphs A-M, wherein the request further comprises bin operational status information, wherein the bin operational status information is provided by the identified recycling bin to the user mobile communication device.
O. The computer-based method according to paragraph N, further comprising:
   when the bin operational status information identifies a malfunction, notifying, by the bin management computing system, a third party of the malfunction; and
   updating, by the bin management computing system, the bin profile of the recycling bin with malfunction information.
P. A recycling system, comprising:
   a data store, the data store configured to store a plurality of bin profiles;
   a bin management computing system, the bin management computing system comprising instructions stored in a memory, which when executed by one or more processors of the bin management computing system, cause the bin management computing system to perform the method comprising:
      storing in the data store, the plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises capacity information associated with the hopper of the respective recycling bin, a residual deposit (RD) value, a number of deposits (ND) value, and a number of bookings (NB) value;
      setting a bin status to a status level for each of the recycling bins based on the capacity information stored in the bin profile for the respective recycling bin;
      receiving from the user mobile communication device, a bin reservation request for an identified recycling bin;
      when the bin status level for the identified recycling bin is at a first status level, rejecting the reservation by the bin management computing system;
      when the bin status level for the identified recycling bin is at a second status level and when the NB value is zero, accepting the reservation by the bin management computing system;
      when the bin status level for the identified recycling bin is at a second status level and the NB value is not zero, rejecting the reservation by the bin management computing system when the NB value is greater than the RD value minus the ND value; and
      when the bin status level for the identified recycling bin is at a second status level and the NB value is not zero accepting the reservation by the bin management computing system and incrementing the NB value by one when the NB value is less than the RD value minus the ND value; and
      subsequent to a deposit in the access-controlled hopper of the identified recycling bin, incrementing the ND value by one when the bin status level is at the second status level.
Q. The recycling system according to paragraph P, further comprising:
   the recycling bin, wherein the recycling bin comprises a locking system coupled to the access-controlled hopper.
R. The recycling system according to any of paragraphs P-Q, further comprising:
   a sensor configured to generate a signal responsive to an amount of waste in the access-controlled hopper.
S. The recycling system according to paragraph R, wherein the sensor is any of a range finding sensor and a weight sensor.
T. A computer-based method, comprising:
   storing, by a bin management computing system in a data store, a plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises a unique bin identifier, geographic information associated with the geographic location of the respective recycling bin, and capacity information associated with the hopper of the respective recycling bin;
   receiving, by a bin management computing system from each of the recycling bins via network communications, the capacity information associated with the hopper of the respective recycling bin;
   receiving, by the bin management computing system, a deposit request from a user mobile communication device, wherein the deposit request comprises an indication of a real-time geographic location of the user mobile communication device;
   based on the real-time geographic location of the user mobile communication device, providing, by the bin management computing system to an interface of the user mobile communication device, a visual representation of the geographic location of an identified recycling bin;
   receiving, by the bin management computing system from the user mobile communication device, a reservation request for the identified recycling bin;
   providing, by the bin management computing system to the identified recycling bin, a reservation token; and
   subsequent to the identified recycling bin confirming the reservation with the user mobile communication device, receiving by the bin management computing system from the identified recycling bin an indication to close the reservation.
U. The computer-based method according to paragraph T, further comprising:
   receiving, by the bin management computing system from each of the recycling bins via network communications, updated capacity information from the identified recycling bin subsequent to the deposit of waste in the access-controlled hopper.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A computer-based method, comprising:
storing, by a bin management computing system in a data store, a plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises a unique bin identifier, geographic information associated with the geographic location of the respective recycling bin, and capacity information associated with the hopper of the respective recycling bin;
receiving, by the bin management computing system, a deposit request from a user mobile communication device, wherein the deposit request comprises an indication of a real-time geographic location of the user mobile communication device;
based on the real-time geographic location of the user mobile communication device, providing, by the bin management computing system to an interface of the user mobile communication device, a visual representation of the geographic location of an identified recycling bin;
receiving, by the bin management computing system from the user mobile communication device, a request to open the identified recycling bin, wherein the request comprises the unique bin identifier of the identified recycling bin and hopper capacity data, wherein the unique bin identifier and hopper capacity data are provided by the identified recycling bin to the user mobile communication device;
identifying, by the bin management computing system, the bin profile of the identified recycling bin based on the unique bin identifier in the request;
updating, by the bin management computing system, the capacity information in the bin profile of the identified recycling bin based on the hopper capacity data; and
providing, by the bin management computing system to the user mobile communication device, an unlock instruction to be provided by the user mobile communication device to the identified recycling bin.

2. The computer-based method of claim 1, further comprising:
subsequent to providing the visual representation of the geographic location of the identified recycling bin to the interface of the user mobile communication device, receiving, by the bin management computing system from the user mobile communication device, a bin reservation request for the identified recycling bin; and
storing, by the bin management computing system, a reservation for the identified recycling bin, wherein the reservation comprises a deposit window.

3. The computer-based method of claim 2, further comprising:
subsequent to receiving the request to open the identified recycling bin from the user mobile communication device, confirming by the bin management computing system, that the request is received within the deposit window.

4. The computer-based method of any of the previous claims, wherein each of the plurality of bin profiles comprises a residual deposit (RD) value, a number of deposits (ND) value, and a number of bookings (NB) value.

5. The computer-based method of claim 4, further comprising:
setting, by the bin management computing system, a bin status for each of the recycling bins based on the capacity information stored in the bin profile for the respective recycling bin, wherein the bin status is settable to a status level.

6. The computer-based method of claim 5, further comprising:
receiving, by the bin management computing system from the user mobile communication device, a bin reservation request for the identified recycling bin;
when the bin status level for the identified recycling bin is at a first status level, rejecting the reservation by the bin management computing system;
when the bin status level for the identified recycling bin is at a second status level and when the NB value is zero, accepting the reservation by the bin management computing system;
when the bin status level for the identified recycling bin is at a second status level and the NB value is not zero, rejecting the reservation by the bin management computing system when the NB value is greater than the RD value minus the ND value; and
when the bin status level for the identified recycling bin is at a second status level and the NB value is not zero accepting the reservation by the bin management computing system and incrementing the NB value by one when the NB value is less than the RD value minus the ND value.

7. The computer-based method of any of claims 4-6, further comprising:
subsequent to providing the unlock instruction to the user mobile communication device, incrementing the ND value by one by the bin management computing system when the bin status level is at the second status level.

8. The computer-based method of claim 1, further comprising:
identifying, by the bin management computing system, at least one recycling bin at a maximum storage capacity.

9. The computer-based method of claim 8, further comprising:
notifying, by the bin management computing system, a third party of the at least one recycling bin at maximum storage capacity.

10. The computer-based method of claim 9, further comprising:
receiving, by the bin management computing system from the third party, an indication the at least one recycling bin at storage capacity as been emptied; and
updating, by the bin management computing system, the capacity information of the bin profile of the at least one recycling bin that has been emptied.

11. The computer-based method of any of the previous claims, wherein the request further comprises bin operational status information, wherein the bin operational status information is provided by the identified recycling bin to the user mobile communication device.

12. The computer-based method of claim 11, further comprising:
when the bin operational status information identifies a malfunction, notifying, by the bin management computing system, a third party of the malfunction; and
updating, by the bin management computing system, the bin profile of the recycling bin with malfunction information.

13. A recycling system, comprising:
a data store, the data store configured to store a plurality of bin profiles;
a bin management computing system, the bin management computing system comprising instructions stored in a memory, which when executed by one or more processors of the bin management computing system, cause the bin management computing system to perform the method comprising:
storing in the data store, the plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises capacity information associated with the hopper of the respective recycling bin, a residual deposit (RD) value, a number of deposits (ND) value, and a number of bookings (NB) value;
setting a bin status to a status level for each of the recycling bins based on the capacity information stored in the bin profile for the respective recycling bin;
receiving from the user mobile communication device, a bin reservation request for an identified recycling bin;
when the bin status level for the identified recycling bin is at a first status level, rejecting the reservation by the bin management computing system;
when the bin status level for the identified recycling bin is at a second status level and when the NB value is zero, accepting the reservation by the bin management computing system;
when the bin status level for the identified recycling bin is at a second status level and the NB value is not zero, rejecting the reservation by the bin management computing system when the NB value is greater than the RD value minus the ND value; and
when the bin status level for the identified recycling bin is at a second status level and the NB value is not zero accepting the reservation by the bin management computing system and incrementing the NB value by one when the NB value is less than the RD value minus the ND value; and
subsequent to a deposit in the access-controlled hopper of the identified recycling bin, incrementing the ND value by one when the bin status level is at the second status level.

14. The recycling system of claim 13, further comprising:
the recycling bin, wherein the recycling bin comprises a locking system coupled to the access-controlled hopper.

15. The recycling system of either of claims 13 or 14, further comprising:
a sensor configured to generate a signal responsive to an amount of waste in the access-controlled hopper.

16. The recycling system of claim 15, wherein the sensor is any of a range finding sensor and a weight sensor.

17. A computer-based method, comprising:
storing, by a bin management computing system in a data store, a plurality of bin profiles, wherein each of the plurality of bin profiles is associated with a respective recycling bin positioned at a geographic location, wherein the recycling bin comprises an access-controlled hopper for receiving recyclable waste, wherein each bin profile comprises a unique bin identifier, geographic information associated with the geographic location of the respective recycling bin, and capacity information associated with the hopper of the respective recycling bin;
receiving, by a bin management computing system from each of the recycling bins via network communications, the capacity information associated with the hopper of the respective recycling bin;
receiving, by the bin management computing system, a deposit request from a user mobile communication device, wherein the deposit request comprises an indication of a real-time geographic location of the user mobile communication device;
based on the real-time geographic location of the user mobile communication device, providing, by the bin management computing system to an interface of the user mobile communication device, a visual representation of the geographic location of an identified recycling bin;
receiving, by the bin management computing system from the user mobile communication device, a reservation request for the identified recycling bin;
providing, by the bin management computing system to the identified recycling bin, a reservation token; and
subsequent to the identified recycling bin confirming the reservation with the user mobile communication device, receiving by the bin management computing system from the identified recycling bin an indication to close the reservation.

18. The computer-based method of claim 17, further comprising:
receiving, by the bin management computing system from each of the recycling bins via network communications, updated capacity information from the identified recycling bin subsequent to the deposit of waste in the access-controlled hopper.
